# EUROPÄISCHE PATENTSCHRIFT

(11) **EP 0 531 842 B1**
(45) Veröffentlichungstag und Bekanntmachung des Hinweises auf die Patenterteilung: **01.05.1996**
(21) Anmeldenummer: 92114832.6
(22) Anmeldetag: 31.08.1992
(51) Int. Cl.: C07C 319/24, C07C 323/11, C10M 135/24, C07C 319/22, C07G 17/00, C10M 135/02, C10M 169/06

(54) **Schwefelung von ungesättigten Alkoholen**
Sulphurization of insaturated alcohols
Sulfuration d'alcools insaturés

(30) Priorität: 13.09.1991 DE 4130489
(43) Veröffentlichungstag der Anmeldung: 17.03.1993
(73) Patentinhaber: Rhein Chemie Rheinau GmbH, D-68219 Mannheim (DE)
(72) Erfinder: Bauer, Armin, Dr., W-6835 Brühl (DE); Pauli, Alfred, Dr., W-6902 Sandhausen (DE); Röhrs, Ingo, Dipl.-Ing., W-6149 Rimbach (DE)
(74) Vertreter: Gremm, Joachim, Dr.

(56) Entgegenhaltungen:
- EP-A- 0 009 701
- US-A- 4 119 549
- US-A- 4 141 840
- DATABASE WPI Week 8547, Derwent Publications Ltd., London, GB; AN 85-293622 & JP-A-60 202 813 (SHISEIDO KK)
- PATENT ABSTRACTS OF JAPAN vol. 6, no. 143 (C-117) 1982 & JP-A-57 065 794 (YOSHIKAWA SEIYU KK)

## Beschreibung

Schwefel reagiert mit aliphatischen Doppelbindungen unter Bildung von Polysulfiden. Diese Schwefelungsreaktion erfolgt auch in Gegenwart von Schwefelwasserstoff, der zweckmäßigerweise mit einem Druck von einigen atm. bei der Schwefelungsreaktion zugegen ist.

### Folgenden Reaktionsmechanismen sind möglich:

Nach Gleichung 1 reagiert Schwefel zunächst an der Allylstellung der Doppelbindung zu einem ungesättigten, substituierten Sulfan (1), welches sich an eine weitere Doppelbindung unter Bildung eines Polysulfids anlagert. Gleichung 1a beschreibt eine weitere Reaktionsmöglichkeit bei Normaldruck, die auch das in der Praxis beobachtete Freiwerden von geringen Mengen Schwefelwasserstoff erklärt. 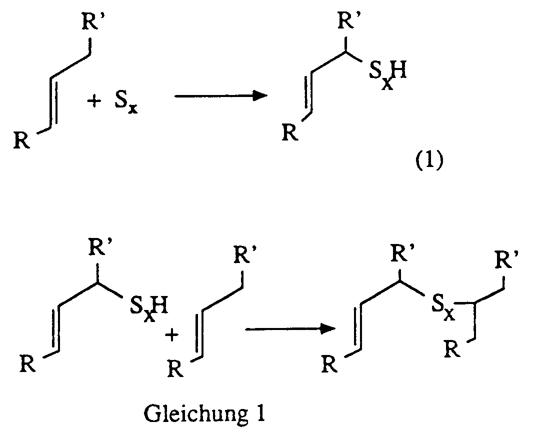
R, R' = Alkyl
x=1-5 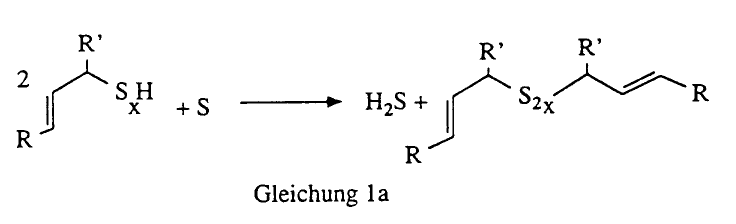
R, R' und x wie in Gleichung 1.

Nach Gleichung 2 kann die Schwefelung der Doppelbindungen mit Schwefel/Schwefelwasserstoff wie folgt beschrieben werden: 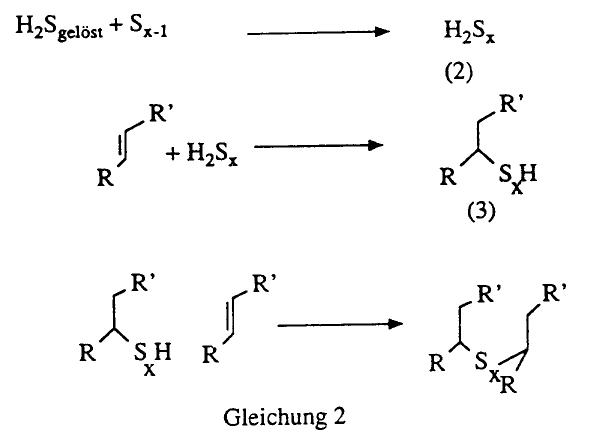
R, R'=Alkyl
x=2-5.

Gelöster Schwefelwasserstoff reagiert zunächst mit Schwefel zum Sulfan (2). Dieses addiert an die Doppelbindung zum substituierten Polysulfan (3), welches unter Addition an eine weitere Doppelbindung zu Polysulfid (4) abreagiert.

Nach der ebenfalls möglichen Gleichung 3 reagiert zunächst Schwefelwasserstoff mit einer Doppelbindung, das dabei entstehende Mercaptan addiert Schwefel unter oxidativer Verknüpfung der Mercaptane zum oben beschriebenen Polysulfid (4). 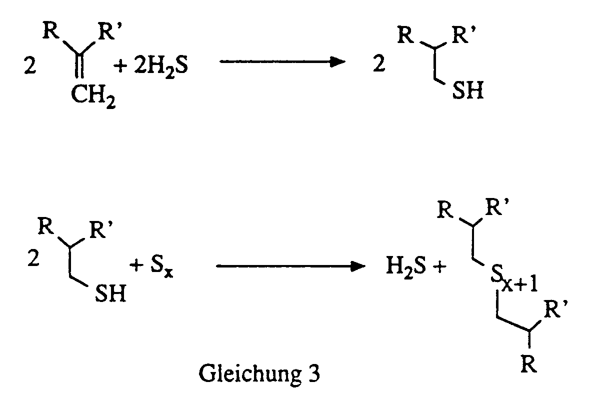
R, R'=Alkyl
x=1-4.

Die Reaktion von Kohlenstoff-Doppelbindungen mit Schwefel hat technische Anwendung gefunden bei der Herstellung von Faktis, einem in der Gummiindustrie vielfältig seit Jahrzehnten eingesetzten Produkt, das aus mit Schwefel oligomerisierten Triglyceriden besteht.

Eine weitere wichtige Anwendung ist die Schwefelung von Alkylestern (vorzugsweise Methylestern) von natürlichen, ungesättigten Fettsäuren pflanzlicher und tierischer Herkunft. Die dabei erhaltenen Produkte enthalten bis zu ca. 20 % Schwefel in Form von Schwefelbrücken. Diese werden als Additive in der Mineralölindustrie als sogenannte EP-Additive (Hochdruckadditive) in Metallbearbeitungsflüssigkeiten, Industriegetriebeölen und Schmierfetten eingesetzt.

Es wurde nun gefunden, daß die Schwefelungsprodukte von ungesättigten Alkoholen, insbesondere Fettalkoholen, als Additive in der Mineralölindustrie eingesetzt werden können.

Ferner sei auf die japanische Patentanmeldung 60202813 (zitiert nach ihrem Derwent-Referat) hingewiesen, in der ungesättige Fettalkohole mit Schwefel umgesetzt werden - ohne Mitverwendung von Schwefelwasserstoff, um ein Mittel zur Behandlung von Pickeln zu erzeugen.

Gegenstand der Erfindung ist ein Verfahren zur Schwefelung ungesättigter Fettalkohole, das dadurch gekennzeichnet ist, daß man einen Fettalkohol bei einer Temperatur von 120-150°C, bei einem Druck von 1-12 bar, vorzugsweise 3-6 bar, gegebenenfalls in Anwesenheit eines Katalysators mit 0,5 bis 2,5 Mol elementarem Schwefel und 0,001 bis 0,5 Mol Schwefelwasserstoff pro Mol Kohlenstoffdoppelbindungen umsetzt.

Fettalkohole sind gesättigte, einfach- oder mehrfach ungesättigte lineare Alkohole mit einer Kettenlänge von 12 bis 22 Kohlenstoffatomen und einer Jodzahl von 30 bis 130 g J₂/100 g. Sie können einzeln oder als Mischungen verwendet werden. Beispiele für solche Alkohole sind: Oleyl-Cetylalkoholgemisch, Oleylalkohol und Oleyl-Linalylalkoholgemisch.

Man kann auch Fettalkohole gemeinsam mit ungesättigten Kohlenwasserstoffen, geradkettig oder verzweigt, mit einer Kohlenstoffzahl von C₆-C₃₀, schwefeln.

Beispiele für vorzugsweise einsetzbare ungesättigte Kohlenwasserstoffe sind Diisobutylen, Tetrapropylen, Dodecen-(1), Heptadecen-(7), Eicosen.

Als Katalysator für die Schwefelungsreaktion werden 0,1-5,0 % (bezogen auf die Ansatzmenge) bevorzugt primäre oder sekundäre Alkylamine, mit Alkylresten C₄-C₃₀, vorzugsweise C₈-C₁₈, verwendet. Der Alkylrest kann linear oder verzweigt sein. Ein vorteilhaftes Beispiel für ein katalysierendes Amin ist das C₁₂-C₁₄-tert.-Alkylamin.

Die erfindungsgemäßen geschwefelten Fettalkohole wirken z.B. in Schmierfetten als sogenannte Extreme Pressure- und Verschleißschutzadditive im Mischreibungsgebiet von rotierenden Maschinenteilen wie z.B. Rollenlager, Zahnradkränzen usw.. Derartige Additve bilden mit den eisenhaltigen Materialien Eisen-Schwefelverbindungen, die ein Verschweißen der rotierenden Maschinenteile verhindern. Außerdem wird dadurch auch das Verschleißverhalten verbessert, d.h. es tritt weniger Verschleiß an den Maschinenteilen auf, wodurch die Lebensdauer verlängert wird.

Mit den geschwefelten Fettalkoholen können in Kombination mit Korrosionsschutzadditiven, Antioxidantien und Buntmetalldesaktivatoren optimale EP-Schmierfette formuliert werden, wenn geeignete Basisfette, hergestellt aus unterschiedlichsten Eindickersystemen wie z.B. Aluminiumseifen, Lithiumseifen, Calciumseifen usw. und geeigneten Grundölen, zur Herstellung der EP-Schmierfette verwendet werden.

Die Einsatzkonzentrationen der geschwefelten Fettalkohole in geeigneten Basis-Fetten liegen zwischen 3,0-5,0 Gew.-%, um Timken-ok-Lasten von 40-50 Lbs (Pounds) zu erreichen. Der Timken-Test nach ASTM-D-2509 dient zur Ermittlung von Kennwerten für Schmierstoffe im Hinblick auf ihr Verhalten unter Mischreibungsbedingungen, definiert als
a) Gutlastwerte und
b) Verschleißwerte.

Eine unmittelbare Beurteilung auf das Verhalten dieser Schmierstoffe in Maschinenelementen gestattet das Verfahren nicht.

### Kurzbeschreibung des Testverfahrens:

Der Schmierstoff wird in einem Reibungssystem geprüft, das aus einem quaderförmigen Prüfblock, über den die Prüfkräfte eingeleitet werden und einem rotierenden Prüfring besteht. Die Prüfkraft wird stufenweise geändert, bis zu Ermittlung einer Gutlast und einer Freßlast.
Der Verschleiß wird durch Einzel-Wägung der beiden Prüfkörper ermittelt. Die Prüfzeit pro Kraftstufe beträgt 10 Minuten.

### Beispiel 1

400 g ungesättigter Alkohol (JZ 70/75) (Oleyl-Cetylalkohol-Gemisch), 45 g Schwefel, 0,5 g langkettiges primäres Alkylamin (C₁₂-C₁₄) werden unter Rühren auf 130°C erwärmt. Dann wird bei 4,3 bar unter dauerndem Rühren 8 Stunden lang Schwefelwasserstoff aufgedrückt. Anschießend wird durch Entspannen und Durchleiten von Stickstoff von nichtreagiertem Schwefelwasserstoff befreit. Der Ansatz hat danach 7 g Schwefelwasserstoff aufgenommen. Das erhaltene Produkt hat folgende Daten:
Schwefelgehalt: 13,1 %.
Ausbeute: praktisch quantitativ bezogen auf den eingesetzten Alkohol.
Konsistenz: homogen, wachsartig, bei Raumtemperatur.
Viskosität (40°C): 171 mm²/s.

### Beispiel 2

400 g ungesättigter Alkohol (JZ 110-130) (Oleyl-Cetylalkohol-Gemisch), 56 g Schwefel, 0,5 g langkettiges primäres Alkylamin (Alkylrest = C₁₂-C₁₄) werden unter Rühren auf 130°C erwärmt. Dann wird unter dauerndem Rühren bei 4,3 bar 8 Stunden lang Schwefelwasserstoff aufgedrückt. Anschließend wird durch Entspannen und Durchleiten von Stickstoff vom nichtreagierten Schwefelwasserstoff befreit. Der Ansatz hat danach 12 g Schwefelwasserstoff aufgenommen. Es entsteht ein hellgelbes, klares, homogenes Produkt.
Schwefelgehalt: 17,0 %.
Ausbeute: praktisch quantitativ bezogen auf den eingesetzten Alkohol.
Viskosität (40°C): 348,8 mm²s.

### Beispiel 3

400 g ungesättigter Alkohol (JZ 110/130), 127,7 g Olefin (JZ 230), 88,7 g Schwefel, 1,0 g langkettiges primäres Amin (C₁₂-C₁₄) werden unter Rühren auf 130°C erwärmt. Dann wird bei 4,3 bar unter dauerndem Rühren 8 Stunden lang Schwefelwasserstoff aufgedrückt. Dabei werden 60 g Schwefelwasserstoff aufgenommen.
Anschließend wird durch Entspannen und Durchleiten von Stickstoff von nichtreagiertem Schwefelwasserstoff befreit. Das erhaltene Produkt hat folgende Daten: Schwefelgehalt 20,0 %.
Ausbeute: praktisch quantitativ bezogen auf den eingesetzten Alkohol.
Viskosität bei 40°C beträgt 230,3 mm²s.

### Beispiel 4

Mit einem Additiv, das neben üblichen Korrosionsschutzmitteln und Antioxidantien ca. 60-80 % eines geschwefelten Fettalkohols aus Beispiel 3 enthielt, können mit einer Legierungshöhe von ca. 5,0 Gew.-% in einem Aluminiumkomplex-Eindicker (Aluminiumstearat) nachfolgende Ergebnisse erzielt werden:

### Rezeptur:

- 10 Teile: Dinonylnaphthalinsulfonsäure, Ca-Salz
- 10 Teile: Dimercaptothiadiazol-Derivat (z.B. Additin M 10 148 der Rheinchemie Rheinau GmbH)
- 4 Teile: Diphenyl-Derivat (z.B. Vulkanox DDA der Bayer AG)
- 6 Teile: Stellöl (Mineralöl 150-VG 46)
- 70 Teile: geschwefelter Fettalkohol aus Beispiel 3

### Prüfergebnisse:

| | |
|---|---|
| Timken-ok-Load in lbs (ASTM D-2509) | 45-55 |
| VKA-Freßlast in N (ASTM D-2266) | 2400-2600 |

| Kupferkorrosion (ASTM D-130) | |
|---|---|
| 3 h 100°C | 1 b |
| 24 h 100°C | 1 b |
| 3 h 120°C | 1 b |
| 24 h 120°C | 1 b - 2 b |

## Patentansprüche

1. Verfahren zur Schwefelung Von linearen, gesättigten, einfach ungesättigten und mehrfach ungesättigten Alkoholen einer Kettenlänge von 12 bis 22 C-Atomen und einer Iodzahl von 30 bis 130 g J₂/100 g bei 120 bis 150 °C bei einem Druck von 1 bis 12 bar, gegebenenfalls in Anwesenheit eines Katalysators, mit 0,5 bis 2,5 Mol elementarem Schwefel und 0,001 Mol bis 0,5 Schwefelwasserstoff pro Mol-Doppelbindung.

2. Verfahren nach Anspruch 1, dadurch gekennzeichnet, daß man Mischungen aus Fettalkoholen und Alkenen schwefelt.

3. Verfahren nach Anspruch 1, dadurch gekennzeichnet, daß als Katalysator 0,1-5 Gew.-% primäres, sekundäres oder tertiäres Amin eingesetzt wird.

4. Verfahren nach Anspruch 2, dadurch gekennzeichnet, daß als Alkene geradkettig oder verzweigte, einfach oder mehrfach ungesättigte Kohlenwasserstoffe mit einer Kohlenstoffzahl von C₆ bis C₃₀ eingesetzt werden können.

5. Verwendung von nach Anspruch 1 hergestellten Schwefelungsprodukten als Additiv in Schmiermitteln und Schmierstoffen.

6. Verwendung von nach Anspruch 1 hergestellten Schwefelungsprodukten als Extreme-Pressure und/oder Verschleißschutzadditiv.

## Claims

1. A process for sulphurising linear, saturated, monounsaturated and polyunsaturated alcohols with a chain length of 12 to 22 carbon atoms and an iodine value of 30 to 130 g I₂/100 g at 120 to 150°C at a pressure of 1 to 12 bar, optionally in the presence of a catalyst, with 0.5 to 2.5 moles of elemental sulphur and 0.001 to 0.5 moles of hydrogen sulphide per mole of double bonds.

2. A process according to Claim 1, characterised in that mixtures of fatty alcohols and alkenes are sulphurised.

3. A process according to Claim 1, characterised in that 0.1-5 wt.% of primary, secondary or tertiary amine is used as catalyst.

4. A process according to Claim 2, characterised in that straight-chain or branched, monounsaturated or polyunsaturated hydrocarbons with a carbon number of C₆ to C₃₀ may be used.

5. Use of sulphurised products prepared in accordance with Claim 1 as additives in lubricants and lubricating agents.

6. Use of sulphurised products prepared in accordance with Claim 1 as additives for protecting against extreme pressure and/or wear.

## Revendications

1. Procédé pour la sulfuration d'alcools linéaires saturés, une fois insaturés et plusieurs fois insaturés, possédant une longueur de chaînes de 12 à 22 atomes de carbone et un indice d'iode de 30 à 130 g I₂/100 g à une température de 120 à 150°C et sous une pression de 1 à 12 bar, éventuellement en présence d'un catalyseur avec de 0,5 à 2,5 moles de soufre élémentaire et de 0,001 mole à 0,5 mole d'acide sulfhydrique par mole de liaison double.

2. Procédé selon la revendication 1, caractérisé en ce qu'on soumet à une sulfuration des mélanges constitués par des alcools gras et des alcènes.

3. Procédé selon la revendication 1, caractérisé en ce que, comme catalyseur, on met en oeuvre de 0,1 à 5% en poids d'une amine Primaire, secondaire ou tertiaire.

4. Procédé selon la revendication 2, caractérisé en ce qu'on peut mettre en oeuvre, comme alcènes, des hydrocarbures une fois ou plusieurs fois insaturés à chaîne droite ou ramifiés; contenant de 6 à 30 atomes de carbone .

5. Utilisation de produits de sulfuration préparés conformément à la revendication 1, comme additif dans des lubrifiants et dans des substances de graissage.

6. Utilisation de produits de sulfuration préparés conformément à la revendication 1, comme additif de protection contre des pressions extrêmes et/ou contre l'abrasion.
